# EUROPÄISCHE PATENTSCHRIFT

(11) **EP 4 278 878 B1**
(45) Veröffentlichungstag und Bekanntmachung des Hinweises auf die Patenterteilung: **02.12.2026**
(21) Anmeldenummer: 23401015.5
(22) Anmeldetag: 09.05.2023
(51) Int. Cl.: A01C 7/08, A01C 7/12, A01C 19/02

(54) **MASCHINE ZUM AUSBRINGEN VON SAATGUT**
MACHINE FOR DISPENSING SEEDS
MACHINE POUR ÉPANDRE DES SEMENCES

(30) Priorität: 17.05.2022 DE 102022112265
(43) Veröffentlichungstag der Anmeldung: 22.11.2023
(73) Patentinhaber: Amazonen-Werke H. Dreyer SE & Co. KG, 49205 Hasbergen (DE)
(72) Erfinder: Johannaber, Stefan Jan, 49536 Lienen (DE); Wiebusch, Thorsten, 49205 Hasbergen (DE); Teckemeyer, Stephan, 49504 Lotte (DE); Stein, Florian, 49078 Osnabrück (DE); Hilbert, Florenz, 48282 Emsdetten (DE); Breuer, Jan Henrik, 48231 Warendorf (DE); Bührke, Johannes, 49170 Hagen a TW (DE)

(56) Entgegenhaltungen:
- EP-A1- 0 216 057
- EP-A2- 2 272 314
- DE-A1- 19 745 098
- DE-U1- 202020 106 176

## Beschreibung

Die Erfindung betrifft eine Maschine zum Ausbringen von Saatgut auf einer landwirtschaftlichen Nutzfläche, mit einem Vorratsbehälter zur Aufnahme des Saatguts, einer Dosiereinheit, die einen Saatgutdosierer aufweist, und einer von der Dosiereinheit über einen Saatgutluftstrom mit Saatgut versorgbaren Säeinheit zur Aussaat des Saatguts.

Eine als Einzelkornsämaschine ausgeführte Maschine zum Ausbringen von Saatgut mit den Merkmalen des Oberbegriffs des Patentanspruchs 1 ist in EP 2 272 314 A2 offenbart.

Die DE 20 2020 106 176 U1 offenbart eine Maschine zum Ausbringen von Saatgut mit einer der Dosiereinheit zugeordneten, von dem Saatgutluftstrom durchströmbaren Saatgutweiche, die derart ausgebildet und angeordnet ist, dass die Säeinheit in einer Versorgungsstellung der Saatgutweiche mit Saatgut versorgt wird und die Saatgutversorgung der Säeinheit in einer Rückführstellung der Saatgutweiche unterbrochen und das Saatgut in den Vorratsbehälter zurückgeführt wird, wobei der Saatgutdosierer einen über einen Antrieb drehbar angetriebenen Dosierabschnitt aufweist.

Solche Maschinen, beispielsweise Sä- oder Drillmaschinen, weisen in der Regel einen Vorratsbehälter zur Aufnahme des auszubringenden, oftmals körnigen oder granularen Saatguts auf, der zum Transport des Saatguts zur Nutzfläche und/oder zur Bevorratung des Saatguts während der Aussaat häufig nach Art eines großvolumigen, tankartigen Gefäßes ausgeführt ist.

Unter dem Begriff "Saatgut" sollen in diesem Zusammenhang alle in der Landwirtschaft einsetzbaren körnigen oder granularen Materialien zusammengefasst werden, insbesondere auch Dünger usw. Als "Aussaat" soll nachfolgend das Ausbringen sämtlicher derartiger Materialien auf Nutzflächen bezeichnet werden.

Zur Aussaat des Saatguts werden entsprechende Maschinen in der Regel rasterartig über die Nutzfläche gefahren, indem diese beispielsweise von einer landwirtschaftlichen Zugmaschine gezogen werden. Die Maschinen weisen in der Regel zahlreiche Säeinheiten auf, über welche das Saatgut zur Erzeugung einer sich in Fahrtrichtung erstreckenden Saatreihe auf der Nutzfläche ausgebracht wird. Die auszubringende Menge des Saatguts hängt dabei von unterschiedlichen Faktoren, wie beispielsweise der Art und Beschaffenheit des Saatguts, der Beschaffenheit der Nutzfläche oder der Fahrgeschwindigkeit der Maschine ab. Zur Anpassung an diese Faktoren weisen solche Maschinen in der Regel zahlreiche zwischen dem Vorratsbehälter und der jeweiligen Säeinheit angeordnete Dosiereinheiten zur Dosierung des Saatguts auf. Die Dosierung des Saatguts in der jeweiligen Dosiereinheit erfolgt in der Regel mittels eines Saatgutdosierers, welcher oftmals einen nach Art eines drehbaren Zellenrads ausgebildeten Dosierabschnitt aufweist. Ein solcher Dosierabschnitt weist über dessen Umfang verteilte Dosierkammern zur Mitnahme des aus dem Vorratsbehälter stammenden Saatguts und der dosierten Versorgung der Säeinheit auf, wobei die zu dosierende Menge des Saatguts über die Drehgeschwindigkeit des Dosierabschnitts einstellbar ist. In der Regel sind mehrere Dosierabschnitte auf einer gemeinsamen Drehachse angeordnet und bilden auf diese Art eine Dosierwalze, die über einen zentralen Dosierantrieb angetrieben wird.

Die Versorgung der Säeinheiten mit der in den jeweils zugeordneten Dosiereinheiten dosierten Saatgutmenge erfolgt bei solchen Maschinen oftmals über einen Saatgutluftstrom, welcher in sich zwischen den Dosiereinheiten und den Säeinheiten erstreckenden pneumatischen Förderleitungen geführt ist. Zur Erzeugung des Saatgutluftstroms, welcher auch als Partikel-Luftstrom bezeichnet werden kann, wird das in den Dosiereinheiten dosierte Saatgut in einen über ein Gebläse erzeugten Luftstrom eingebracht.

Zur flächigen Aussaat sind bei solchen Maschinen häufig zahlreiche Säeinheiten parallel zueinander angeordnet, mit welchen das Saatgut in zahlreichen, sich in Fahrtrichtung der Maschine parallel zueinander erstreckenden Saatreihen ausgesät werden kann. Jede der Säeinheiten wird dabei über einen eigenen, von der jeweiligen Dosiereinheit zu der entsprechenden Säeinheit verlaufenden Saatgutluftstrom mit Saatgut versorgt.

Solche Maschinen haben sich grundsätzlich bewährt. Allerdings kann es in der Praxis zur Erzeugung einer im späteren Pflanzenbestand nutzbaren Fahrgasse oder zur Vermeidung einer doppelten Aussaat erforderlich sein, bestimmte Säeinheiten während der Aussaat einzeln oder gruppenweise abzuschalten.

Eine einzelne oder gruppenweise Abschaltung bestimmter Säeinheiten ist bei Maschinen der vorstehend beschriebenen Art aber nicht ohne Weiteres möglich, da beispielsweise ein Absperren des in der Förderleitung geführten Saatgutstroms zu einem Aufstauen des Saatguts und einer Blockierung der Förderleitungen führen würde. Durch Abschalten des Dosierantriebs können zwar alle auf der gemeinsamen Drehachse angeordneten Dosierabschnitte einer Dosierwalze abgeschaltet werden, wodurch die Dosierung in allen entsprechenden Dosiereinheiten gestoppt und die Aussaat an allen mit diesen Dosiereinheiten verbundenen Säeinheiten gleichzeitig unterbrochen werden kann - allerdings ist ein gezieltes Abschalten einzelner Dosiereinheiten hierüber nicht möglich.

Vor diesem Hintergrund ist es aus der US 7,690,440 B2 bekannt, schaltbare Absperrklappen zwischen dem Vorratsbehälter und den Dosiereinheiten anzuordnen, mit welchen die Saatgutversorgung der jeweiligen Dosiereinheiten unterbrochen werden kann. Dadurch wird erreicht, dass der Saatgutluftstrom hinter den abgesperrten Dosiereinheiten unterbrochen und schließlich auch die Aussaat der jeweiligen, mit den Dosiereinheiten verbundenen Säeinheiten gestoppt wird. Mit einer solchen Absperrklappe kann zwar ein Aufstauen des Saatguts in der Förderleitung vermieden werden, allerdings hat es sich als nachteilig erwiesen, dass die vor der Dosiereinheit wirkende Absperrung erst mit einer gewissen zeitlichen Verzögerung an der Säeinheit wirksam wird, da das sich hinter der Absperrklappe bereits in der Dosiereinheit und dem Saatgutluftstrom befindliche Saatgut erst noch zu der Säeinheit strömt. Im umgekehrten Falle ergibt sich zudem eine gewisse Anlaufverzögerung, bis das Saatgut nach Öffnen der Absperrklappe über die Dosiereinheit und den Saatgutluftstrom die Säeinheit erreicht und die Aussaat fortgesetzt werden kann.

Zur Vermeidung der genannten Nachteile wird in der US 8,132,521 B2 eine Maschine vorgeschlagen, bei der einzeln schaltbare Absperrklappen erst hinter den Dosiereinheiten bzw. deren Saatgutdosierern, aber noch vor der Bildung des Saatgutstroms vorgesehen sind. Hierdurch werden die Verzögerungen bei der Unterbrechung der Aussaat und deren Wiederaufnahme reduziert. Allerdings hat es sich bei dieser Maschine als nachteilig erwiesen, dass das bereits in der Dosiereinheit befindliche Saatgut für die Dauer der Absperrung innerhalb der jeweiligen Dosiereinheit, insbesondere in dem Dosierabschnitt des Saatgutdosierers, verbleibt. Da der Dosierantrieb zur Dosierung des Saatguts für die nicht abgesperrten Säeinheiten kontinuierlich weiterläuft, kann dies zu Beschädigungen des Saatguts, beispielsweise durch Reibung, Quetschung und Zermahlung, kommen, insbesondere im Falle längerer Absperrzeiten.

Davon ausgehend stellt sich die Erfindung die Aufgabe, eine Maschine anzugeben, bei welcher sich einzelne Säeinheiten gezielt abschalten lassen, ohne dass dabei größere Verzögerungen oder eine erhöhte Gefahr von Beschädigungen des Saatguts auftreten.

Diese Aufgabe wird bei einer Maschine der eingangs genannten Art durch die Merkmale des Patentanspruchs 1 gelöst. Vorteilhafte Weiterbildungen sind in den abhängigen Unteransprüchen angegeben.

Die der Dosiereinheit zugeordnete, von dem Saatgutluftstrom durchströmbare Saatgutweiche erlaubt in deren Versorgungsstellung eine Versorgung der jeweiligen Säeinheit mit Saatgut und in deren Rückführstellung eine Unterbrechung der Aussaat der jeweiligen Säeinheit bei gleichzeitiger Rückführung des Saatguts in einen von dem Vorratsbehälter getrennten Rückführbereich. Es ergibt sich eine mit minimalen Verzögerungen wirksame Absperrung der Säeinheit bei gleichzeitiger Reduzierung von Beschädigungen des Saatguts. Die Saatgutweiche kann zwischen der Versorgungsstellung und der Rückführstellung verbracht werden.

Eine vorteilhafte Weiterbildung sieht in diesem Zusammenhang eine sich zwischen der Saatgutweiche und der Säeinheit erstreckende, von dem Saatgutluftstrom durchströmbare Versorgungsleitung und/oder eine sich zwischen der Saatgutweiche und dem Rückführbereich erstreckende, von dem Saatgutluftstrom durchströmbare Rückführleitung vor. Eine solche Anordnung ermöglicht eine einfache Unterbrechung der Aussaat durch Umschalten der Saatgutweiche zwischen der Versorgungsstellung und der Rückführstellung. In der Versorgungsstellung kann der Saatgutluftstrom durch die sich von der Abströmseite der Saatgutweiche in Richtung der Säeinheit erstreckende Versorgungsleitung strömen, wodurch die Aussaat ermöglicht werden kann. In der Rückführstellung kann der Saatgutluftstrom durch die sich von der Abströmseite der Saatgutweiche in Richtung des Rückführbereichs erstreckende Rückführleitung strömen, wodurch die Aussaat unterbrochen werden kann.

In diesem Zusammenhang hat es sich als vorteilhaft erwiesen, wenn die Rückführleitung in einen Saatgutabscheider zur Abscheidung des Saatguts aus dem Saatgutluftstrom mündet. In dem Saatgutabscheider kann auf vorteilhafte Weise eine Trennung des Saatguts und des Luftstroms erfolgen. Der Saatgutabscheider kann insbesondere nach Art eines Schwerkraftabscheiders ausgebildet sein, wodurch eine besonders zuverlässige, schwerkraftbasierte Trennung des schwereren Saatguts von dem leichteren Luftstrom erfolgen kann. Konstruktiv besonders vorteilhaft ist es in diesem Zusammenhang, wenn der Saatgutabscheider zumindest teilweise den Rückführbereich zur Rückführung des von dem Luftstrom getrennten Saatguts in den Vorratsbehälter bildet.

In einer Weiterbildung der Erfindung wird eine sich zwischen dem Saatgutabscheider und der Versorgungsleitung erstreckende Bypassleitung zur Ableitung des von dem Saatgut getrennten Luftstroms vorgeschlagen. Eine solche Bypassleitung ermöglicht eine besonders einfache und gerichtete Ableitung des von dem Saatgut getrennten Luftstroms. Ein Aufstauen des Luftstroms kann durch die Bypassleitung vermieden werden. Zur besonders einfachen Ableitung des Luftstroms ist es vorteilhaft, wenn sich die Bypassleitung von der Oberseite des Saatgutabscheiders erstreckt. In diesem Zusammenhang hat es sich auch als konstruktiv vorteilhaft erwiesen, wenn die Bypassleitung gekrümmt, insbesondere S-förmig gekrümmt, ausgebildet ist.

Im Zusammenhang mit der Bypassleitung wird vorgeschlagen, dass die Bypassleitung gemeinsam mit der Saatgutweiche derart umschaltbar ist, dass diese in der Versorgungsstellung geschlossen und in der Rückführstellung geöffnet ist. Eine derartige Anordnung ermöglicht in der Versorgungsstellung gute Druckverhältnisse des Luftstroms mit möglichst geringen Druckverlusten. Hierdurch wird ein beständiger, kontinuierlicher Saatgutluftstrom zwischen der Dosiereinheit und der Säeinheit ermöglicht. In der Rückführstellung erlaubt eine derartige Anordnung eine zuverlässige Ableitung des von dem Saatgut getrennten Luftstroms von dem Saatgutabscheider zu der Versorgungsleitung. Auch in der Rückführstellung können durch eine solche Anordnung die Druckverluste möglichst geringgehalten werden. Besonders vorteilhaft ist eine Anordnung, bei der sowohl die Bypassleitung als auch die Rückführleitung mit der Saatgutweiche umschaltbar ist.

Es hat sich als vorteilhaft herausgestellt, wenn die Saatgutweiche über einen Aktor zwischen der Versorgungsstellung und der Rückführstellung umschaltbar ist. Hierdurch kann eine zuverlässige Umschaltung zwischen der Versorgungsstellung und der Rückführstellung erreicht werden. Ferner kann ein Aktor zur Reduzierung von Verlusten und Wartezeiten bei der Unterbrechung und/oder dem Wiederbeginn der Aussaat eine schnelle Umschaltung der Saatgutweiche ermöglichen. Konstruktiv vorteilhaft ist es, wenn der Aktor mechanisch, hydraulisch oder elektrisch betätigbar ist. Im Hinblick auf eine einfache Wartung des Aktors hat es sich als vorteilhaft erwiesen, wenn dieser von einer Außenseite der Maschine zugänglich angeordnet ist.

In einer Weiterbildung der Erfindung wird vorgeschlagen, dass die Saatgutweiche als ein einseitig drehgelagertes Schließmittel ausgebildet ist. Eine solche Ausgestaltung ermöglicht eine besonders einfache und schnelle Umschaltung zwischen der Versorgungsstellung und der Rückführstellung. Hierbei ist in der Versorgungsstellung die Rückführleitung geschlossen und die Versorgungsleitung geöffnet. In der Rückführstellung ist die Rückführleitung geöffnet und der Versorgungsleitung geschlossen. Besonders vorteilhaft im Hinblick auf eine zuverlässige Umschaltung ist eine Ausgestaltung des Schließmittels als ein nach Art einer Klappe einseitig drehgelagerter Balken oder Keil. Konstruktiv vorteilhaft ist in diesem Zusammenhang, wenn das dem Drehlager entgegengesetzte Ende des Schließmittels an der Anströmseite der Saatgutweiche angeordnet ist. Es hat sich in diesem Zusammenhang ferner als vorteilhaft erwiesen, wenn die Saatgutweiche als eine einseitig drehbar gelagerte Schwenkeinheit ausgebildet ist. Die Schwenkeinheit kann insbesondere derart ausgebildet sein, dass in deren Versorgungsstellung die Rückführleitung und die Bypassleitung geschlossen sind sowie die Versorgungsleitung geöffnet ist. Demgegenüber sind in der Rückführstellung der Schwenkeinheit die Rückführleitung und die Bypassleitung geöffnet und die Versorgungsleitung geschlossen.

Es wird ferner vorgeschlagen, dass der Saatgutdosierer zur Erzeugung und/oder Einstellung des Saatgutluftstroms eingerichtet ist. Eine solche Anordnung erlaubt eine zuverlässige Erzeugung bzw. Einstellung des Saatgutluftstroms. Insbesondere kann der Saatgutdosierer zur kontinuierlichen Erzeugung des Saatgutluftstroms ausgebildet sein. In diesem Zusammenhang wird vorgeschlagen, dass der Saatgutdosierer zur dosierten Abgabe des Saatguts in den Luftstrom ausgebildet ist. Ferner hat es sich als vorteilhaft erwiesen, wenn der Saatgutdosierer zur Einstellung des Saatgutluftstroms und der Aussaatmenge unterschiedliche, über den Saatgutdosierer einstellbare Mengen des Saatguts in den Luftstrom abgeben kann.

In Bezug auf die Anordnung des Saatgutdosierers hat es sich als konstruktiv vorteilhaft erwiesen, wenn dieser an der Anströmseite der Saatgutweiche angeordnet ist. Eine derartige Anordnung ist besonders platzsparend und erlaubt eine effektive Nutzung des Luftstroms zur Saatgutförderung.

Erfindungsgemäß ist vorgesehen, dass der Saatgutdosierer einen über einen Dosierantrieb drehbar angetriebenen Dosierabschnitt aufweist. Ein derartiger Dosierabschnitt ermöglicht eine konstruktiv einfache und exakte Dosierung des Saatguts. Besonders vorteilhaft im Hinblick auf eine zuverlässige und störungsarme Dosierung ist eine Ausgestaltung des Dosierabschnitts als um eine Drehachse drehbar angetriebene Scheibe, insbesondere Rundscheibe. Auf vorteilhafte Weise kann der Saatgutluftstrom und hierüber die Aussaatmenge durch eine Anpassung der Drehgeschwindigkeit des Dosierabschnitts anpassbar sein.

In diesem Zusammenhang hat es sich als konstruktiv vorteilhaft herausgestellt, wenn der Dosierabschnitt über seinen Umfang verteilte Dosierkammern aufweist. Ein derart ausgebildeter Dosierabschnitt erlaubt eine zuverlässige und schonende Mitnahme des aus dem Vorratsbehälter stammenden Saatguts in den Dosierkammern und eine einfache dosierte Abgabe des Saatguts in den Luftstrom. Die Dosierung des Saatguts kann dabei über die Größe der Dosierkammern und/oder über die Drehgeschwindigkeit des Dosierabschnitts eingestellt werden. In einer konstruktiv vorteilhaften Ausgestaltung des Dosierabschnitts sind die Dosierkammern zwischen sich von dem Umfang des Dosierabschnitts ersteckenden Nocken ausgebildet.

In einer vorteilhaften Weiterbildung wird vorgeschlagen, dass der Dosierabschnitt einen mit einer Dosierlippe zusammenwirkenden Dosierbereich aufweist, über welchen das Saatgut zur Bildung des Saatgutluftstroms aus dem Vorratsbehälter in einen durch den Dosierbereich geführten Luftstrom einbringbar ist. Die Dosierlippe erlaubt im Zusammenspiel mit den Dosierkammern eine zuverlässige, dosierte Abgabe des Saatguts in den Luftstrom. Insbesondere kann die Dosierlippe als einseitig federnd gelagertes, laschenartiges Element ausgeführt sein. Vorteilhaft ist es, wenn die Dosierlippe nach Art einer Sperrklinke ausgebildet ist und eine Dosierung nur in einer Drehrichtung des Dosierabschnitts zulässt. Die Dosierlippe kann ferner in vorteilhafter Weise dazu ausgebildet sein, ein Einströmen des Luftstroms in den Vorratsbehälter zu verhindern.

In Bezug auf den Dosierabschnitt wird weiter vorgeschlagen, dass dieser einen mit einer Rückführlippe zusammenwirkenden Rückführbereich aufweist, über welchen das Saatgut aus dem Saatgutabscheider in den Vorratsbehälter rückführbar ist. Die Rückführlippe erlaubt im Zusammenspiel mit den Dosierkammern eine zuverlässige Rückführung des Saatguts aus dem Rückführbereich, insbesondere aus dem Saatgutabscheider, in den Vorratsbehälter. Insbesondere kann die Rückführlippe als einseitig federnd gelagertes, laschenartiges Element ausgeführt sein. Vorteilhaft ist es, wenn die Rückführlippe nach Art einer Sperrklinke ausgebildet ist und eine Rückführung nur in einer Drehrichtung des Dosierabschnitts zulässt. Die Rückführlippe kann ferner in vorteilhafter Weise dazu ausgebildet sein, ein Einströmen des Luftstroms in den Vorratsbehälter zu verhindern. Ferner kann die Rückführlippe derart ausgeführt sein, dass ein Eindringen des Saatguts aus dem Vorratsbehälter in den Rückführbereich entgegen der Drehrichtung des Dosierabschnitts verhindert werden kann.

Erfindungsgemäß ist vorgesehen, dass der Rückführbereich oberhalb des Dosierbereichs angeordnet ist. Eine derartige Anordnung ermöglicht es, dass der Dosierabschnitt gleichzeitig an mehreren Stellen über seinen Umfang Saatgut fördern kann. Mit ein und demselben Dosierabschnitt kann somit gleichzeitig Saatgut in dem Dosierbereich aus dem Vorratsbehälter in den Luftstrom eingebracht werden und aus dem Rückführbereich Saatgut in den Vorratsbehälter zurückgeführt werden.

Es ist ferner von konstruktivem Vorteil, wenn der Rückführbereich oberhalb der Drehachse des Dosierabschnitts und der Dosierbereich unterhalb der Drehachse des Dosierabschnitts angeordnet ist. Eine derartige Ausgestaltung ermöglicht sowohl eine zuverlässige Dosierung des Saatguts als auch eine effektive Rückführung des Saatguts.

In diesem Zusammenhang ist es ferner bevorzugt, wenn die Förderwirkung der Rückführlippe größer als die Förderwirkung der Dichtlippe ist. Hierdurch kann sichergestellt werden, dass der Rückführbereich nicht überläuft, da jederzeit mehr Saatgut über die Rückführlippe aus dem Rückführbereich in den Vorratsbehälter zurückgefördert werden kann, als über die Dosierlippe, Saatgutweiche und Rückführleitung in den Rückführbereich hineinströmen kann. Als konstruktiv besonders vorteilhaft hat es sich erwiese, wenn zur Sicherstellung einer größeren Förderwirkung der Rückführlippe deren Dichtwirkung kleiner ist als die Dichtwirkung der Dosierlippe.

Eine vorteilhafte Ausgestaltung der Maschine sieht vor, dass diese eine zentrale Luftstromerzeugung zur Erzeugung des Luftstroms aufweist. Die Luftstromerzeugung kann insbesondere getrennt von dem Saatgutstrom angeordnet sein. Die Luftstromerzeugung kann beispielsweise als Gebläse ausgebildet sein. Der in der Luftstromerzeugung erzeugte Luftstrom kann insbesondere derart ausgebildet sein, dass dieser von der Luftstromerzeugung zu dem Dosierbereich des Dosierabschnitts strömen kann, wo das Saatgut zur Bildung des Saatgutluftstroms in den Luftstrom eingebracht werden kann. Anschließend kann der Saatgutluftstrom zu der Saatgutweiche strömen, von wo er entweder - in der Versorgungsstellung der Saatgutweiche - durch die Versorgungsleitung zu der Säeinheit oder - in der Rückführstellung der Saatgutweiche - zum Saatgutabscheider zur bedarfsweisen Abscheidung des Saatguts aus dem Luftstrom strömt. Der von dem Saatgut getrennte Luftstrom kann aus dem Saatgutabscheider über die Bypassleitung in die Versorgungsleitung strömen.

In einer vorteilhaften Weiterbildung der Erfindung wird vorgeschlagen, dass die Dosiereinheit spiegelbildlich zu deren Längsmittelachse verteilt jeweils zwei Saatgutweichen sowie Saatgutdosierer aufweist. Eine derartige Anordnung ist von Vorteil für eine platzsparende Anordnung der Saatgutdosierer, insbesondere wenn die Saatgutdosierer nahe der Längsmittelachse und die Saatgutweichen weiter entfernt angeordnet sind. In diesem Zusammenhang kann es vorteilhaft sein, wenn die zwei Saatgutdosierer jeweils einen Dosierabschnitt aufweisen, die zur Erzeugung von in entgegengesetzten Richtungen strömenden Saatgutluftströmen gegensinnige Drehrichtungen haben. Eine derartige Dosiereinheit kann insbesondere mittig unterhalb eines Auslaufs des Vorratsbehälters angeordnet sein, was vorteilhaft im Hinblick auf eine gleichmäßige Entleerung des Vorratsbehälters ist.

Darüber hinaus wird vorgeschlagen, dass die Säeinheit einen oder mehrere Säschare zur Ausbringung des Saatguts auf der Nutzfläche aufweist. Ein Säschar kann dabei zur Erzeugung einer Saatreihe ausgebildet sein. Insbesondere kann ein Säschar dabei zur Bildung einer Furche in der Nutzfläche und zur Aussaat bzw. zum Ausbringen des über den in der Versorgungsleitung geführten Saatgutluftstrom transportierten Saatguts ausgebildet sein.

In diesem Zusammenhang ist es von Vorteil, wenn der Säeinheit mindestens eine, insbesondere zwei Versorgungsleitungen zur Versorgung mit Saatgut zugeordnet sind. Eine derartige Anordnung ermöglicht eine zuverlässige Versorgung der Säeinheit mit Saatgut.

Im Hinblick auf eine effiziente Aussaat hat es sich als vorteilhaft erwiesen, wenn die Maschine mehrere gleichartig aufgebaute Säeinheiten aufweist, welche zur flächigen Aussaat des Saatguts zueinander parallel angeordnet sind. Hierdurch kann eine zeitsparende Aussaat in mehreren, parallel zueinander verlaufenden Reihen ermöglicht werden.

In einer vorteilhaften Weiterbildung der Erfindung wird vorgeschlagen, dass die Maschine mehrere gleichartig aufgebaute Dosiereinheiten aufweist, welche zur Dosierung unterschiedlicher Saatgutmengen an einer oder mehreren Säeinheiten und/oder einem oder mehreren Säscharen parallel nebeneinander angeordnet sind. Hierdurch kann eine zuverlässige Versorgung der Säeinheiten und/oder Säschare mit unterschiedlichen Saatgutmengen erreicht werden. In diesem Zusammenhang kann es bevorzugt sein, dass nicht jede der mehreren gleichartig aufgebauten Dosiereinheiten eine Saatgutweiche aufweist, wodurch der Aufbau der Maschine vereinfacht wird. Hierdurch kann auf vorteilhafte Weise erreicht werden, dass sich an den Dosiereinheiten, welche keine Saatgutweiche aufweisen, die Saatgutversorgung der zugeordneten Säeinheiten und/oder Säschare nicht unterbrechen lässt. Diese Dosiereinheiten können anstelle der Saatgutweiche ein Blindstück aufweisen. Eine Saatgutweiche und damit die Möglichkeit einer Unterbrechung der Aussaat kann insbesondere für diejenigen Dosiereinheiten vorgesehen sein, welche mit denjenigen Säeinheiten zusammenwirken, die zur Schaltung bzw. Erzeugung einer Fahrgasse erforderlich sind.

Es wird weiter vorgeschlagen, dass die Maschine zumindest eine Dosierwalze mit mehreren auf einer Drehachse axial angeordneten Dosierabschnitten aufweist. Hierdurch kann auf konstruktiv einfache Weise ein gemeinsamer Dosierantrieb der Dosierabschnitte umgesetzt werden. In einer vorteilhaften Weiterbildung wird vorgeschlagen, dass eine Dosierwalze einen Dosierantrieb zum zentralen Antrieb der Dosierabschnitte aufweist. Außerdem erweist sich eine solche Anordnung als besonders platzsparend. Der Dosierantrieb kann beispielsweise als Elektromotor oder als Hydraulikmotor ausgebildet sein.

In diesem Zusammenhang wird weiter vorgeschlagen, dass die Maschine zumindest zwei Dosierwalzen aufweist, wobei jede Dosierwalze einen eigenen Dosierantrieb aufweist oder sich zumindest zwei Dosierwalzen einen gemeinsamen Dosierantrieb teilen. In vorteilhafter Weise erlauben mehrere Dosierantriebe die Abschaltung einzelner Dosierwalzen zur Unterbrechung der Aussaat und/oder die Einstellung der Aussaatmenge einzelner Dosierwalzen durch eine Anpassung der Drehzahl des jeweiligen Dosierantriebs. Eine Anordnung, bei der sich zumindest zwei Dosierwalzen einen Dosierantrieb teilen, ermöglicht einen energieeffizienten Betrieb der Dosierwalzen und ist vergleichsweise einfach aufgebaut. Die Dosierwalzen können in einer platzsparenden Anordnung parallel zueinander angeordnet und/oder mit einer gemeinsamen Drehachse nebeneinander angeordnet sein.

Weitere Einzelheiten und Vorteile der Erfindung werden nachfolgend unter Zuhilfenahme der beigefügten Zeichnungen von Ausführungsbeispielen erläutert. Die Erfindung ist jedoch nicht auf diese Ausführungsbeispiele beschränkt. Weitere Ausführungsbeispiele können sich durch Kombination der Merkmale einzelner oder mehrerer der zuvor beschriebenen Merkmale untereinander und/oder mit einzelnen oder mehreren Merkmalen der Ausführungsbeispiele oder Ansprüche ergeben. In den Zeichnungen zeigen:
- Fig. 1: eine perspektivische Ansicht einer an einer landwirtschaftlichen Zugmaschine angekoppelten, erfindungsgemäßen Maschine;
- Fig. 2: eine perspektivische, ausschnittsweise, geschnittene Ansicht einer erfindungsgemäßen Maschine mit einer Dosiereinheit gemäß einer ersten Ausführungsform;
- Fig. 3-5: ausschnittsweise, geschnittene Seitenansichten gemäß der Darstellung in Fig. 2;
- Fig. 6-7: ausschnittsweise, geschnittene Seitenansichten einer erfindungsgemäßen Maschine mit einer Dosiereinheit gemäß einer zweiten Ausführungsform;
- Fig. 8-9: ausschnittsweise, geschnittene Seitenansichten einer erfindungsgemäßen Maschine mit einer Dosiereinheit gemäß einer dritten Ausführungsform;
- Fig. 10: eine weitere perspektivische, ausschnittsweise, geschnittene Ansicht gemäß der Darstellung in Fig. 8 und 9;
- Fig. 11: eine weitere perspektivische, ausschnittsweise Ansicht gemäß der Darstellung in Fig. 8 und 9;
- Fig. 12a-b: schematische Ansichten zweier Dosierkonzepte erfindungsgemäßer Maschinen, und
- Fig. 13a-d: weitere schematische Ansichten von vier Dosierkonzepten erfindungsgemäßer Maschinen.

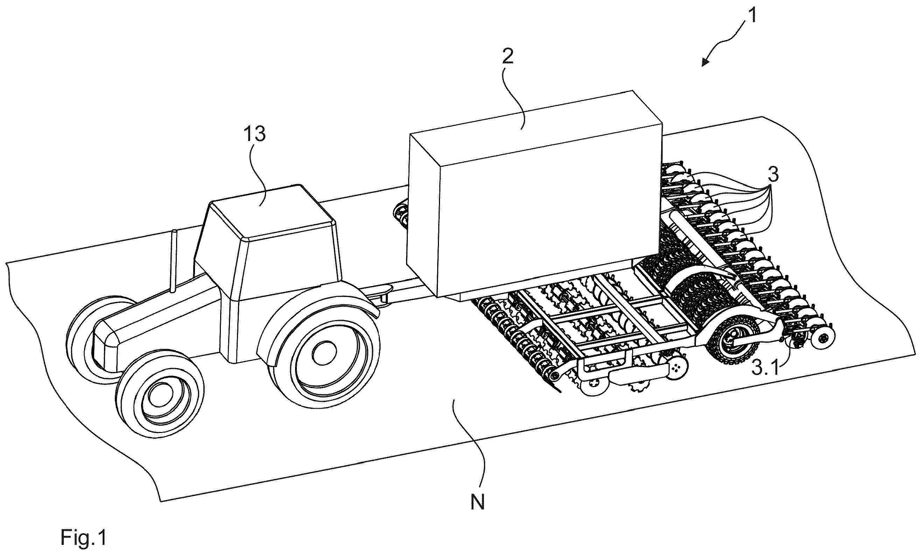

Die Darstellungen in den Fig. 1 bis 13d zeigen in verschiedenen, teils geschnittenen oder auch schematischen Ansichten eine Maschine 1 zum Ausbringen von Saatgut S auf einer landwirtschaftlichen Nutzfläche N. Bei der in den Figuren dargestellten Maschine 1 handelt es sich um eine Sämaschine, es kann sich jedoch hierbei ebenso um eine andere Maschine 1 zum Ausbringen von Saatgut S oder einem anderen körnigen oder granularen Material auf einer Nutzfläche N handeln.

Zur Aufnahme des Saatguts S weist die Maschine 1 einen zentralen Vorratsbehälter 2 auf, welcher als großvolumiges, tankartiges Gefäß ausgebildet ist. Der Vorratsbehälter S dient dem Transport des Saatguts S zu der Nutzfläche N und insbesondere auch der Bevorratung des Saatguts S während des Ausbringens bzw. der Aussaat des Saatguts S.

Zum Ausbringen des Saatguts S wird die Maschine 1 von einer landwirtschaftlichen Zugmaschine 13 rasterartig über die Nutzfläche N gezogen, vgl. Fig. 1. Alternativ kann die Maschine 1 aber auch selbstfahrend ausgebildet sein. Die Maschine 1 weist, neben diversen anderen Werkzeugen, Geräten oder Apparaten zur Bodenbearbeitung, zahlreiche, parallel angeordnete Säeinheiten 3 auf, über welche das Saatgut S in parallel verlaufenden Saatreihen flächig auf der Nutzfläche N ausgebracht werden kann. Eine Säeinheit 3 umfasst dabei in der Regel mindestens ein Säschar 3.1 zur Bildung einer Furche in der Nutzfläche N, in welche das aus dem Vorratsbehälter 2 stammende Saatgut S eingebracht wird.

Die von den Säeinheiten 3 auszubringende Menge des Saatguts S hängt von verschiedenen Faktoren ab, wie beispielsweise der Art, Sorte und Beschaffenheit des Saatguts S, dem Zustand der Nutzfläche N oder der Fahrgeschwindigkeit der Maschine 1. Zur Anpassung an diese Faktoren weist die Maschine 1 mehrere Dosiereinheiten 11 auf, in welchen die auszubringende Menge des Saatguts S dosiert wird. Jeder Säeinheit 3 ist dabei jeweils eine Dosiereinheit 11 zugeordnet, wobei die Dosiereinheiten 11 zwischen dem Vorratsbehälter 2 und den Säeinheiten 3 angeordnet sind. Eine Dosiereinheit 11 kann auch zumindest zwei Säeinheiten 3 versorgen. Die Dosiereinheiten 11 weisen jeweils mindestens einen Saatgutdosierer 9 auf, mittels welchem die Dosierung des aus dem Vorratsbehälter 2 stammenden Saatguts S, d. h. die Einstellung der auszubringenden Menge des Saatguts S, erfolgt. Die Versorgung der Säeinheiten 3 mit der in den jeweils zugeordneten Dosiereinheiten 11 dosierten Menge des Saatguts S erfolgt über einen Saatgutluftstrom Ls, welcher hauptsächlich in sich zwischen den Dosiereinheiten 11 und den Säeinheiten 3 erstreckenden, pneumatischen Förderleitungen geführt ist. Der Saatgutluftstrom Ls wird von den Partikeln des Saatgut S und den Luftstrom L gebildet und kann daher auch als Partikel-Luftstrom bezeichnet werden.

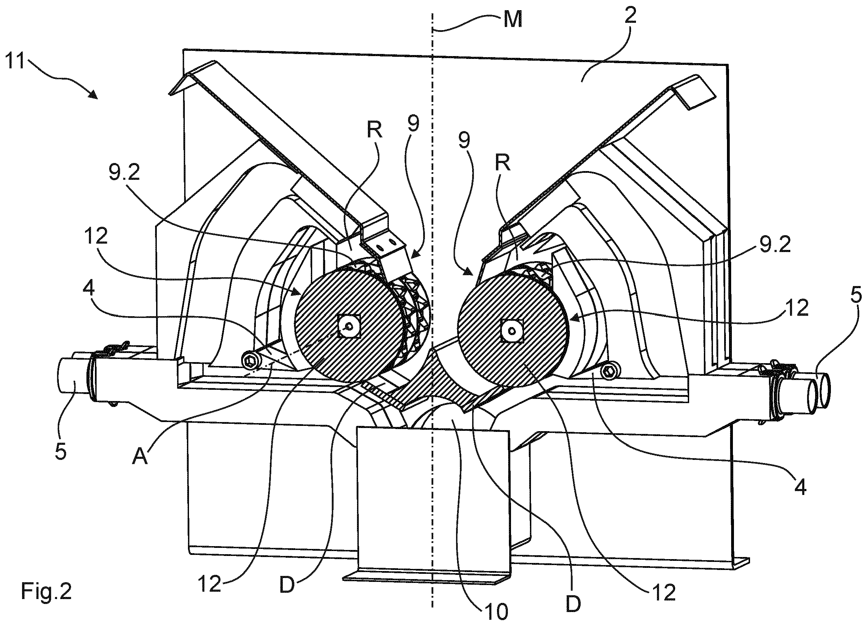

Zur Erzeugung einer nach der Aussaat im späteren Pflanzenbestand nutzbaren Fahrgasse oder zur Vermeidung einer doppelten Aussaat sind bei der Maschine 1 die Säeinheiten 3 einzeln oder gruppenweise abschaltbar ausgeführt. Die Maschine 1 erlaubt die Absperrung der Säeinheiten 3 mit geringen Verzögerungen bei gleichzeitig geringer Beschädigungsgefahr des Saatguts S, was nachfolgend zunächst anhand der Darstellung in Fig. 2 erläutert wird.

Unterhalb eines trichterförmigen Auslaufs des Vorratsbehälters 2 weist die Maschine 1 mehrere gleichartig aufgebaute Dosiereinheiten 11 zur Dosierung des Saatguts S auf, welche segmentartig parallel nebeneinander angeordnet sind. Gemäß dem in Fig. 2 dargestellten Ausschnitt sind zwei Dosiereinheiten 11 parallel nebeneinander entlang des trichterförmigen Auslaufs des Vorratsbehälters 2 angeordnet. Jede der Dosiereinheiten 11 weist zwei Saatgutdosierer 9 auf, welche spiegelbildlich zur Längsmittelachse M verteilt angeordnet sind. Ein Saatgutdosierer 9 weist dabei jeweils einen scheibenartigen, drehbaren Dosierabschnitt 9.2 auf. Die Dosierabschnitte 9.2 der beiden Dosiereinheiten 11 sind auf zwei parallel angeordneten, sich quer zu der Längsmittelachse M erstreckenden Dosierwalzen 12 angeordnet.

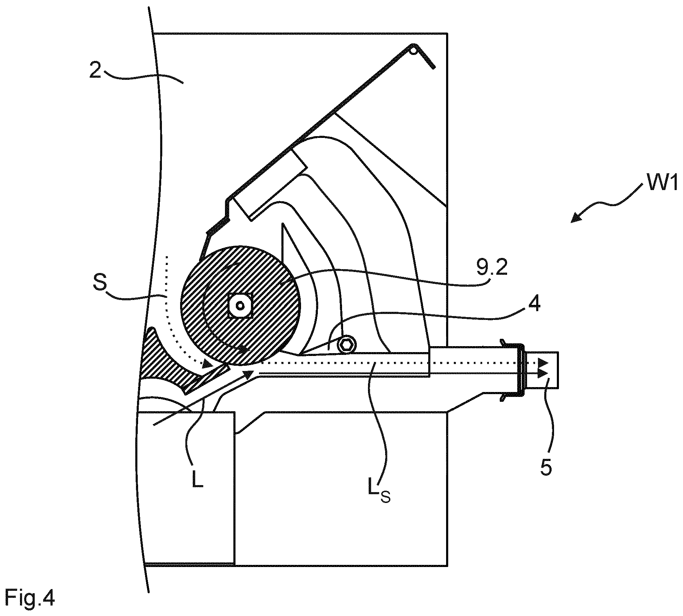

Unterhalb der Dosiereinheiten 11 und des Vorratsbehälters 2 ist eine zentrale Luftstromerzeugung 10 angeordnet, welche beispielsweise als Gebläse ausgeführt sein kann. Mittels der zentralen Luftstromerzeugung 10 wird ein Luftstrom L erzeugt. In diesem Luftstrom L wird das in der Dosiereinheit 11 dosierte Saatgut S zur Bildung des Saatgutluftstroms Ls eingebracht (vgl. bspw. Fig. 4), welcher in mehreren pneumatischen Förderleitungen zu den Säeinheiten 3 bzw. den Säscharen 3.1 gefördert wird. Für die Bildung des Saatgutluftstroms Ls können Injektoren eingesetzt werden.

Zur Abschaltung einzelner Säeinheiten 3 können die Dosiereinheiten 11 jeweils eine von dem Saatgutluftstrom Ls durchströmbare Saatgutweiche 4 aufweisen, welche zwischen einer die jeweilige Säeinheit 3 mit Saatgut S versorgenden Versorgungsstellung W₁ und einer Rückführstellung W₂, in welcher die Saatgutversorgung der Säeinheit 3 unterbrochen ist, umschaltbar ist.

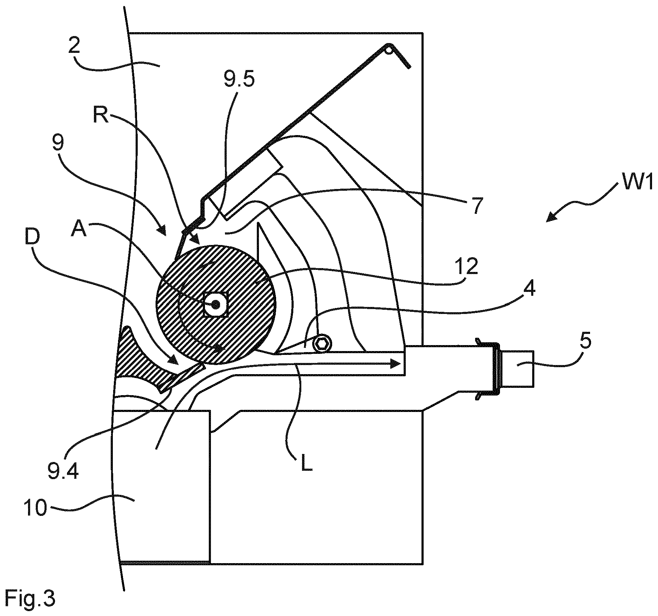

Bevor die Ausgestaltung und Funktion der von dem Saatgutluftstrom Ls durchströmbaren Saatgutweiche 4 im Detail erläutert wird, wird anhand der Darstellung in Fig. 3 zunächst die Funktion des Saatgutdosierers 9 der Dosiereinheit 11 erläutert, welcher zur Erzeugung des Saatgutluftstroms Ls ausgebildet ist.

Der Saatgutdosierer 9 umfasst einen scheibenartigen Dosierabschnitt 9.2, welcher über einen Dosierantrieb 9.1 um die Drehachse A drehbar angetrieben ist. Gemäß der Darstellung in Fig. 3 ist der Dosierabschnitt 9.2 im Gegenuhrzeigersinn drehbar. Über seinen Umfang verteilt, weist der Dosierabschnitt 9.2 mehrere Dosierkammern 9.3 auf, vgl. Fig. 2. Diese als separate Zellen ausgebildeten Dosierkammern 9.3 sind zur portionsweisen Mitnahme des Saatguts S aus dem Vorratsbehälter 2 ausgebildet, wobei das Saatgut S im Bereich des trichterförmigen Auslaufs des Vorratsbehälters 2 schwerkraftbasiert in die Dosierkammern 9.3 strömt. Aufgrund der Drehung des Dosierabschnitts 9.2 um die Drehachse A wird das in den Dosierkammern 9.3 befindliche Saatgut S um den Umfang des Dosierabschnitts 9.1 gefördert. Vom Funktionsprinzip ähnelt der Dosierabschnitt 9.2 einem aus dem Bereich der Fördertechnik bekannten Zellenrad.

Das in den Dosierkammern 9.3 befindliche Saatgut S wird in Richtung eines Dosierbereichs D gefördert. Über den Dosierbereich D wird das in den Dosierkammern 9.2 befindliche Saatgut S in den durch den Dosierbereich D geführten Luftstrom L eingebracht. Hierfür weist der Saatgutdosierer 9 eine mit dem Dosierbereich D zusammenwirkende Dosierlippe 9.4 auf. Die Dosierlippe 9.4 ist als einseitig federnd gelagertes, laschenartiges Bauteil ausgeführt, welches in dem Dosierbereich D eine dosierte Entleerung der einzelnen Dosierkammern 9.3 erlaubt. Wie dies anhand der Darstellung in Fig. 3 erkennbar ist, ist die Dosierlippe 9.4 nach Art einer Sperrklinke ausgebildet, welche mit dem Dosierabschnitt 9.2 derart zusammenwirkt, dass die Abgabe des Saatguts S aus den Dosierkammern 9.3 nur in Drehrichtung des Dosierabschnitts 9.1 möglich ist. Über den Dosierbereich D und die Dosierlippe 9.4 gelangt das Saatgut S portionsweise in den von der unterhalb der Dosiereinheit 11 angeordneten Luftstromerzeugung erzeugten Luftstrom L (vgl. Fig. 4), wodurch der Saatgutluftstrom Ls gebildet wird. Über die Drehgeschwindigkeit des Dosierabschnitts 9.2 kann eingestellt werden, wie viel Saatgut S aus dem Vorratsbehälter 2 in den Luftstrom L eingebracht wird. Die Dosierlippe 9.4 ermöglicht aufgrund ihrer federnden Lagerung auch eine Abdichtung des Vorratsbehälters 2 gegenüber dem Luftstrom L. Der auf diese Weise gebildete Saatgutluftstrom Ls kann anschließend über die pneumatischen Förderleitungen zu einer Säeinheit 3 strömen, wo das Saatgut S ausgesät wird.

Einige oder auch alle Dosiereinheiten 11 können eine Saatgutweiche 4 aufweisen, über welche die Aussaat an einzelnen Säeinheiten 3 unterbrochen werden kann. Im Folgenden wird eine erste Ausführungsform einer Saatgutweiche 4 anhand der Darstellungen in Fig. 3-5 erläutert.

Die Saatgutweiche 4 ist in Strömungsrichtung des Saatgutluftstroms Ls hinter dem Saatgutdosierer 9 angeordnet. Im dargestellten Ausführungsbeispiel ist die Saatgutweiche 4 in direkter Nachbarschaft zum Saatgutdosierer 9 angeordnet. Die Saatgutweiche 4 ist gemäß der Darstellung in Fig. 3 als ein einseitig drehgelagertes Schließmittel ausgebildet. Im vorliegenden Ausführungsbeispiel ist das Schließmittel nach Art eines drehgelagerten Keils ausgeführt, welcher an einer Y-förmigen Gabelstelle zweier Leitungen gelagert ist. Die Saatgutweiche 4 ist durch Drehung zwischen zwei Stellungen umschaltbar.

In der in der Fig. 3 dargestellten Versorgungsstellung W₁ ist die Saatgutweiche 4 derart angeordnet, dass eine sich zwischen der Saatgutweiche 4, insbesondere zwischen der Abströmseite der Saatgutweiche 4 und der Säeinheit 3 erstreckende Versorgungsleitung 5 geöffnet ist. Wie dies insbesondere anhand der Darstellung in Fig. 4 erkennbar ist, kann der in dem Dosierbereich D gebildete Saatgutluftstrom Ls über die in der Versorgungsstellung W₁ befindliche Saatgutweiche 4 in die Versorgungsleitung 5 strömen, wodurch die Säeinheit 3 mit Saatgut S versorgt werden kann. In der Versorgungsstellung W₁ kann daher die Aussaat des Saatguts S erfolgen. Die Verteilung des Saatgutluftstroms Ls an eine oder mehrere Säeinheiten 3 kann dabei über einen Injektor erfolgen.

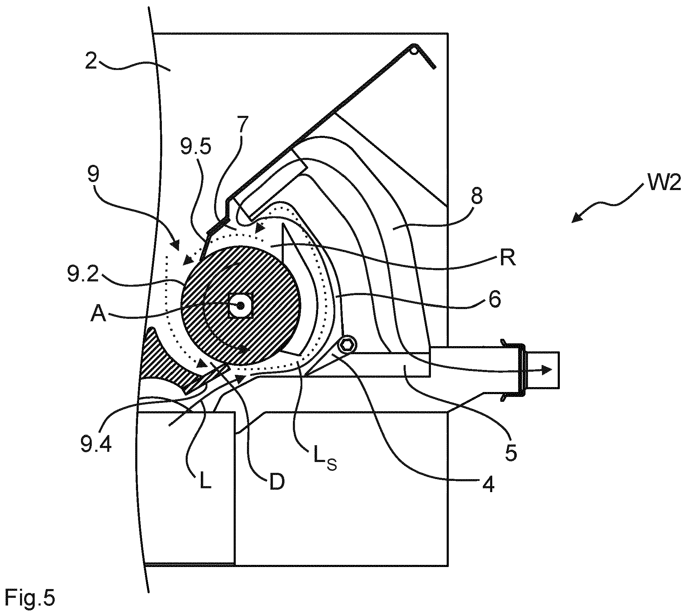

Zur Unterbrechung der Aussaat kann die Saatgutweiche 4 von der Versorgungsstellung W₁ in eine Rückführstellung W₂ umgeschaltet werden. Gemäß den Darstellungen in den Fig. 4 und 5 erfolgt die Umschaltung der Saatgutweiche 4 zwischen der Versorgungsstellung W₁ und der Rückführstellung W₂ durch die Drehung des keilartigen Schließmittels entgegen dem Uhrzeigersinn. Die Umschaltung bzw. Drehung der Saatgutweiche 4 kann über einen Aktor 4.1 erfolgen, welcher beispielsweise als mechanisch, elektrisch oder hydraulisch betriebener Aktor 4.1 ausgeführt sein kann.

In der Rückführstellung W₂ gemäß Fig. 5 ist die Versorgungsleitung 5 durch das Schließmittel geschlossen. Der Saatgutluftstrom Ls kann deshalb nicht mehr zu der Säeinheit 3 strömen, wodurch die Aussaat an dieser Säeinheit 3 unterbrochen ist. Um ein Aufstauen des Saatgutluftstroms Ls und die damit beispielsweise aufgrund von Reibung einhergehende Beschädigung der Saatgutpartikel zu vermeiden, ist in der Rückführstellung W₂ eine Rückführleitung 6 geöffnet. Diese Rückführleitung 6 erstreckt sich von der Abströmseite der Saatgutweiche 4 und mündet in einen Saatgutabscheider 7. Der in dem Dosierbereich D gebildete Saatgutluftstrom Ls strömt in der Rückführstellung W₂ der Saatgutweiche 4 durch die Rückführleitung 6 in den Saatgutabscheider 7.

In dem Saatgutabscheider 7 erfolgt die Trennung des Saatguts S und des Luftstroms L. Dafür ist der Saatgutabscheider 7 als Schwerkraftabscheider ausgebildet, in welchem das Saatgut S schwerkraftbasiert aufgrund dessen höherer Masse aus dem Luftstrom L abgeschieden wird. Der von dem Saatgut S getrennte Luftstrom L strömt über eine Bypassleitung 8 in die Versorgungsleitung 5. Die Bypassleitung ist nicht mit der Saatgutweiche 6 schaltbar. Durch die Versorgungsleitung 5 kann der Luftstrom L zu der Säeinheit 3 gelangen und beispielsweise dazu genutzt werden, evtl. noch in der Versorgungsleitung 5 befindliches, restliches Saatgut S zu der Säeinheit 3 zu fördern.

Das von dem Luftstrom L getrennte Saatgut S sammelt sich in dem Saatgutabscheider 7. Um ein Überlaufen des Saatgutabscheiders 7 zu vermeiden und das Saatgut S vor Beschädigung zu schützen, wird das Saatgut S aus dem Saatgutabscheider 7 in den Vorratsbehälter 2 zurückgeführt. Die Rückführung des Saatguts S in den Vorratsbehälter 2 wird nachfolgend anhand der Darstellung in Fig. 5 erläutert.

Der Saatgutabscheider 7 ist derart angeordnet, dass dieser sich in einen Rückführbereich R des Dosierabschnitts 9.2 des Saatgutdosierers 9 erstreckt. Über den Rückführbereich R kann das in dem Saatgutabscheider 7 befindliche Saatgut S mittels der Dosierkammern 9.3 des Dosierabschnitts 9.2 in den Vorratsbehälter 2 zurückgeführt werden. Das von dem Luftstrom L getrennte Saatgut S strömt dafür schwerkraftbasiert in die Dosierkammern 9.3. Aufgrund der Drehung des Dosierabschnitts 9.2 um die Drehachse A wird das in den Dosierkammern 9.3 befindliche Saatgut S um den Umfang des Dosierabschnitts 9.2 gefördert. Zur Rückführung in den Vorratsbehälter 2 weist der Saatgutdosierer 9 eine mit dem Rückführbereich R zusammenwirkende Rückführlippe 9.5 auf. Die Rückführlippe 9.5 ist als einseitig federnd gelagertes, laschenartiges Bauteil ausgeführt, welches in dem Rückführbereich R eine Entleerung der einzelnen Dosierkammern 9.2 erlaubt. Wie dies anhand der Darstellung in Fig. 3 erkennbar ist, ist die Rückführlippe 9.5 analog zu der Dosierlippe 9.4 nach Art einer Sperrklinke ausgebildet, welche mit dem Dosierabschnitt 9.2 derart zusammenwirkt, dass die Abgabe des Saatguts S aus den Dosierkammern 9.3 in den Vorratsbehälter 2 nur in Drehrichtung des Dosierabschnitts 9.2 möglich ist. Über den Rückführbereich D und die Rückführlippe 9.5 gelangt das Saatgut S portionsweise zurück in den Vorratsbehälter 2.

Um eine sichere Entleerung des Saatgutabscheiders 7 und/oder des Rückführbereichs R zu gewährleisten, ist die Förderwirkung der Rückführlippe 9.5 größer als die Förderwirkung der Dichtlippe 9.4. Hierdurch kann sichergestellt werden, dass stets mehr Saatgut S aus dem Saatgutabscheider 7 über die Rückführlippe 9.5 in den Vorratsbehälter 2 zurückgeführt wird, als über den mittels der Dosierlippe 9.4 gebildeten Saatgutluftstrom Ls über die Saatgutweiche 4 und die Rückführleitung 6 in den Saatgutabscheider 7 hineinströmt.

Anhand der vorstehenden Erläuterungen wird deutlich, dass der Dosierabschnitt 9.2 in der Rückführstellung W₂ der Saatgutweiche 4 eine Doppelfunktion erfüllt und an mehreren Stellen entlang seines Umfangs Saatgut S fördert. Einerseits wird über dessen Dosierbereich D das Saatgut S zur Bildung des Saatgutluftstroms L_{S} in den Luftstrom L eingebracht, andererseits wird über dessen Rückführbereich R das im Saatgutabscheider 7 von dem Luftstrom L wieder getrennte Saatgut S in den Vorratsbehälter 2 zurückgeführt. Zur Ermöglichung dieser Doppelfunktion ist der Rückführbereich R oberhalb des Dosierbereichs D angeordnet, vgl. Fig. 3. In dem dargestellten Ausführungsbeispiel ist der Rückführbereich R oberhalb der Drehachse A des Dosierabschnitts 9.2 und der Dosierbereich D unterhalb der Drehachse A des Dosierabschnitts 9.2 angeordnet.

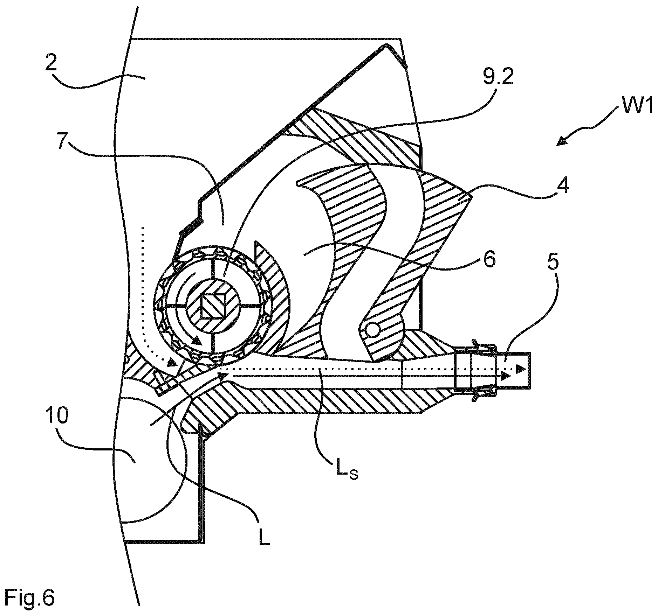

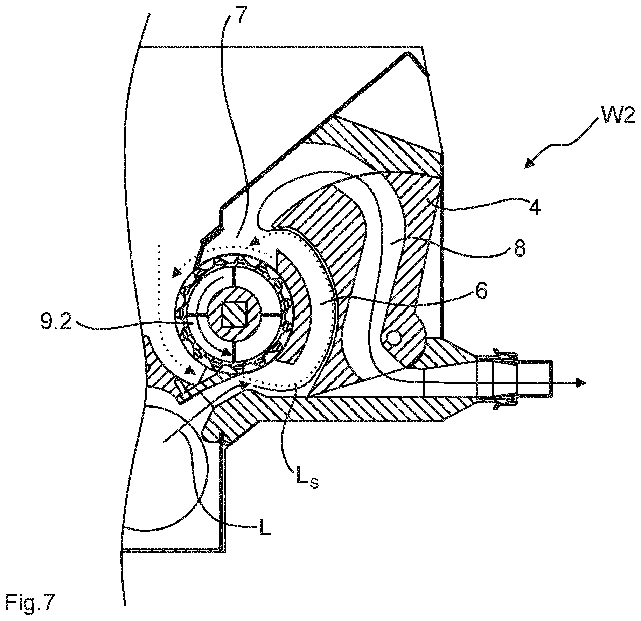

Nachfolgend wird anhand der Darstellungen in den Fig. 6 und 7 die Funktionsweise einer alternativen Ausgestaltung der Saatgutweiche 4 gemäß eines zweiten Ausführungsbeispiels erläutert. Wie dies gemäß der Darstellung in Fig. 6 erkennbar ist, ist die Saatgutweiche 4 in diesem Ausführungsbeispiel nicht als keilartiges, einseitig drehgelagertes Schließmittel ausgebildet. Stattdessen ist die Saatgutweiche 4 als einseitig drehgelagerte Schwenkeinheit ausgeführt.

Das vorstehend erläuterte Grundprinzip der Saatgutweiche 4 gilt auch für die als Schwenkeinheit ausgeführten Saatgutweiche 4. Denn auch diese ist zwischen einer Versorgungsstellung W₁ (vgl. Fig. 6) und einer Rückführstellung W₂ (vgl. Fig. 7) mittels eines Aktors 4.1 umschaltbar. Der (in den Figuren nicht dargestellte) Aktor 4.1 kann bei der Schwenkeinheit in vorteilhafter Weise leicht von einer Außenseite der Maschine 1 zugänglich angeordnet sein, wodurch beispielsweise dessen Wartung vereinfacht werden kann.

Analog zu den vorstehenden Erläuterungen ist in der Versorgungsstellung W₁ eine Versorgungsleitung 5 geöffnet, welche sich zwischen der Saatgutweiche 6 und der Säeinheit 3 erstreckt. Hierdurch ist die Aussaat durch die Säeinheit 3 möglich. Gleichzeitig ist in der Versorgungsstellung W₁ die Rückführleitung 6 geschlossen, vgl. Fig. 6.

Bei der Umschaltung in die Rückführstellung W₂ wird die gesamte Schwenkeinheit so verschwenkt, dass ein keilartiger Vorsprung bzw. Ansatz der Schwenkeinheit die Versorgungsleitung 5 schließt und zugleich die Rückführleitung 6 öffnet, vgl. Fig. 7. Hierdurch wird die Saatgutversorgung der Säeinheit 3 unterbrochen und die Aussaat entsprechend gestoppt. Analog zu dem ersten Ausführungsbeispiel strömt der Saatgutluftstrom Ls in der Rückführstellung W₂ über die Rückführleitung 6 in den Saatgutabscheider 7, wo eine Trennung des Luftstroms L und des Saatguts S erfolgt. Das Saatgut S ist analog zu der vorstehend beschriebenen Ausführungsform mittels des Dosierabschnitts 9.2 über dessen Rückführbereich R in den Vorratsbehälter 2 rückführbar. Dabei ist die Rückführleitung 6 gemeinsam mit der Saatgutweiche 4 derart umschaltbar, dass diese in der Versorgungsstellung W₁ geschlossen und in der Rückführstellung W₂ geöffnet ist. Wie dies anhand der Darstellung in Fig. 7 erkennbar ist, ist in der Rückführstellung W₂ eine Wand der Rückführleitung 6 von einer Seite der Schwenkeinheit gebildet.

Etwas anders ausgestaltet ist hingegen die Bypassleitung 8 zur Rückführung des in dem Saatgutabscheider 7 von dem Saatgut S getrennten Luftstroms L in die Versorgungsleitung 5. Wie dies anhand des Vergleichs der Darstellungen in Fig. 6 und 7 erkennbar ist, ist die Bypassleitung 8 gemeinsam mit der Saatgutweiche 4 derart umschaltbar, dass diese in der Versorgungsstellung W₁ geschlossen und in der Rückführstellung W₂ geöffnet ist. Dies erlaubt die Sicherstellung guter Druckverhältnisse sowohl in der Versorgungsstellung W₁ als auch in der Rückführstellung W₂, da Druckverluste der Luftstroms L vermieden oder zumindest reduziert werden können. Wie dies in der Darstellung gemäß Fig. 7 erkennbar ist, ist die Bypassleitung 8 S-förmig gekrümmt ausgeführt.

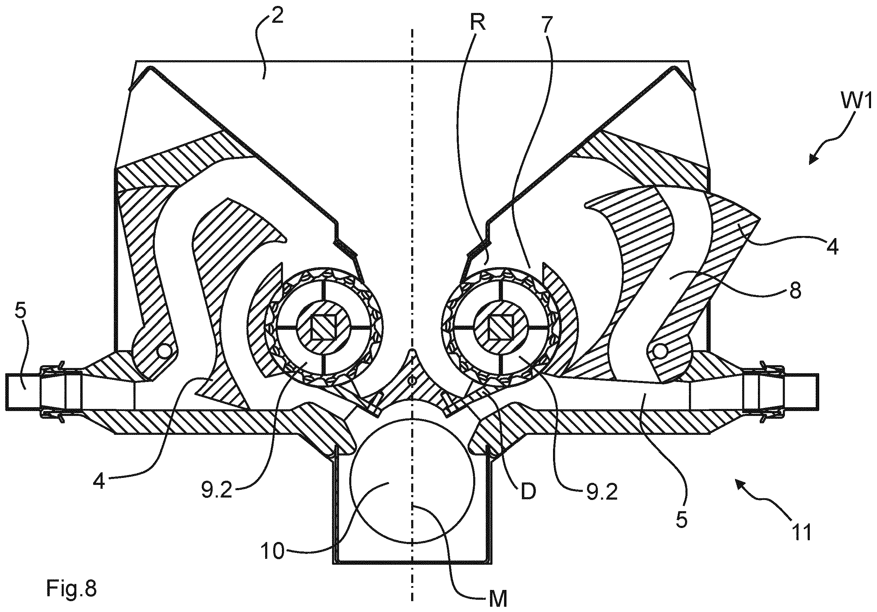

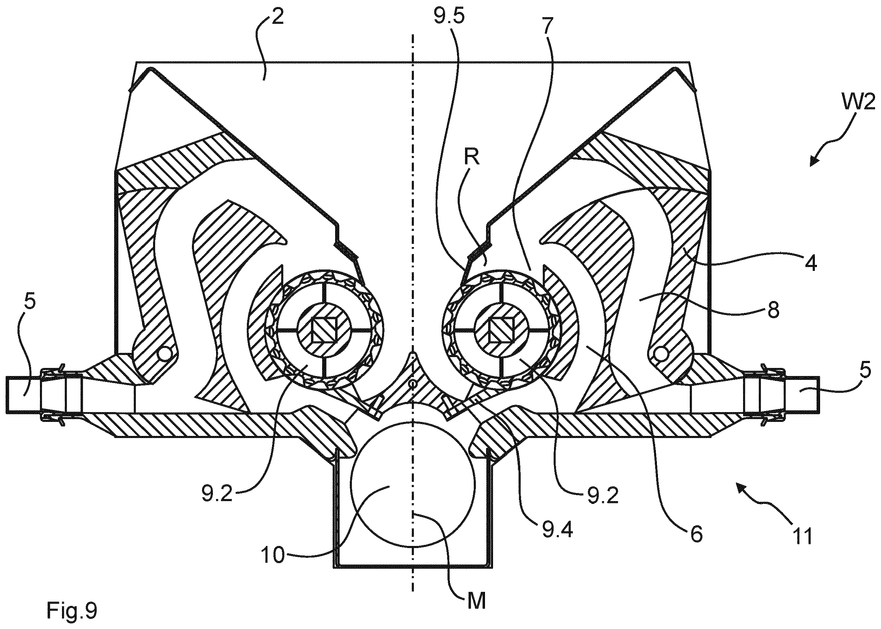

Anhand der Darstellungen in den Fig. 8 und 9 soll am Beispiel einer symmetrisch zu deren Längsmittelachse M ausgebildeten, zwei Saatgutdosierer 9 und zwei Saatgutweichen 4 aufweisenden Dosiereinheit 11 der Saatgutstrom und der Luftstrom L durch die Dosiereinheit 11 zusammengefasst werden. Dabei ist die in der rechten Hälfte der Dosiereinheit 11 angeordnete Saatgutweiche in Fig. 8 in deren Versorgungsstellung W₁ und in Fig. 9 in deren Rückführstellung W₂ dargestellt.

Das in dem Vorratsbehälter 2 bevorratete Saatgut S wird über die gegensinnig drehbaren Dosierabschnitte 9.2 der Saatgutdosierer 9 in die beiden Dosierbereiche D gefördert. In den Dosierbereichen D wird das Saatgut S über die Dosierlippen 9.4 in die Luftströme L eingebracht, welche in der zentral unterhalb der Dosiereinheit 11 angeordneten Luftstromerzeugung 10 erzeugt wurden. Hierdurch werden zwei Saatgutluftströme Ls gebildet. In der Versorgungsstellung W₁ der als Schwenkeinheit ausgebildeten Saatgutweiche 4 (vgl. den rechten Teil der Fig. 8) ist die Versorgungsleitung 5 geöffnet und der Saatgutluftstrom Ls kann durch die Saatgutweiche 4 über die Versorgungsleitung 5 zu der mit deren distalem Ende verbundenen Säeinheit 3 strömen. Dabei sind ebenso Anordnungen denkbar, bei denen sich nicht nur eine, sondern zwei oder mehr Versorgungsleitungen 5 zwischen einer Saatgutweiche 4 und einer Säeinheit 3 erstrecken. Über die Säeinheit 3 findet schließlich die Aussaat das Saatguts S statt.

In der Rückführstellung W₂ (vgl. den rechten Teil der Fig. 9) der Saatgutweiche 4 ist die Aussaat hingegen unterbrochen, beispielsweise zur Erzeugung einer Fahrgasse auf der Nutzfläche N. Der in dem Dosierbereich D erzeugte Saatgutluftstrom Ls strömt durch die Saatgutweiche 4 über die Rückführleitung 6 zu dem Saatgutabscheider 7. In dem Saatgutabscheider 7 erfolgt eine Trennung des Saatguts S von dem Luftstrom L. Der Luftstrom L strömt durch die Bypassleitung 8 in die Versorgungsleitung 5. Das Saatgut S wird mittels des Dosierabschnitts 9.2 über dessen Rückführbereich R im Zusammenspiel mit der Rückführlippe 9.5 zurück in den Vorratsbehälter 2 gefördert. Die Rückführlippe 9.5 des Dosierabschnitts 9.2 ist so ausgebildet, dass deren Förderwirkung zur Sicherstellung einer Entleerung des Rückführbereichs R und des Saatgutabscheiders 7 größer ist als die Förderwirkung der Dichtlippe 9.4 desselben Dosierabschnitts 9.2.

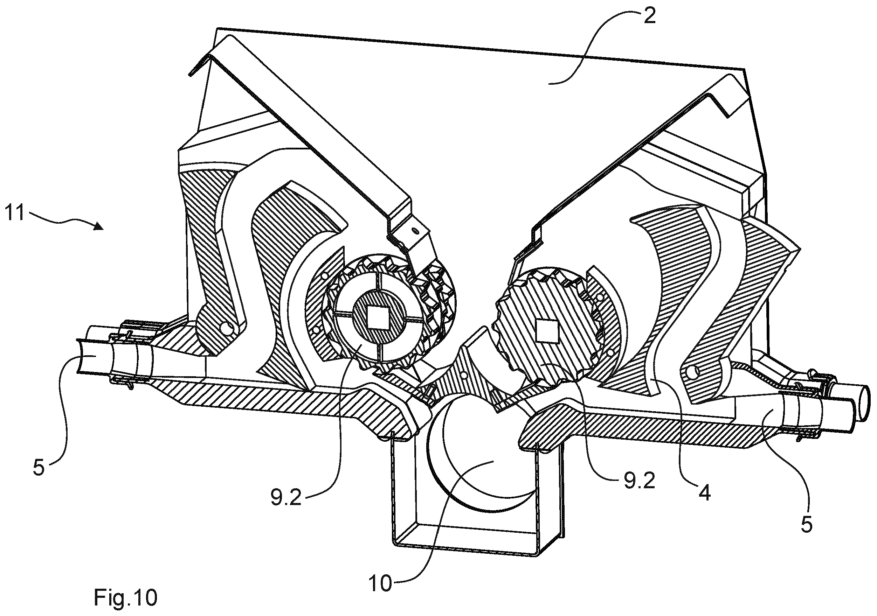

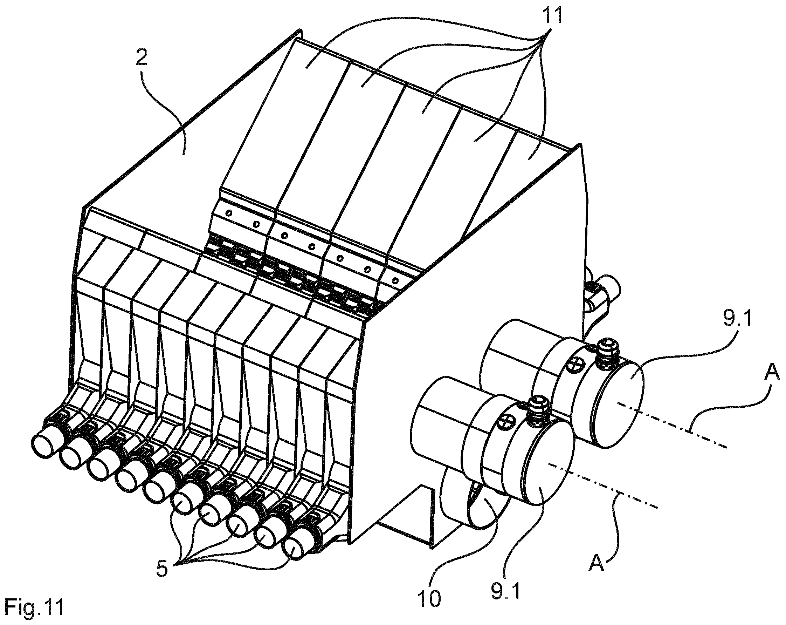

Wie dies anhand der Darstellungen in Fig. 10 und 11 deutlich wird, können mehrere gleichartige, vorstehend beschriebene Dosiereinheiten 11 segmentartig parallel nebeneinander angeordnet sein. Insbesondere können die Dosiereinheiten 11 entlang des trichterförmigen Auslaufs des Vorratsbehälters 2 angeordnet sein. Die Dosierabschnitte 9.2 der jeweiligen Dosiereinheiten 11 sind dabei drehbar auf zwei parallel angeordneten Dosierwalzen 12 angeordnet. Den beiden Dosierwalzen 12 ist dabei ein Dosierantrieb 9.1 zugeordnet, welcher zur Drehung der Dosierwalzen 12 um die jeweilige Drehachse A ausgebildet ist. Über eine Drehzahlsteuerung der als Motoren ausgebildeten Dosierantriebe 9.1 ist die Drehzahl der Dosierwalzen 12 und damit der einzelnen Dosierabschnitte 9.2 steuerbar. Über eine Anpassung der Dosierung kann somit die Aussaatmenge des Saatguts S eingestellt werden.

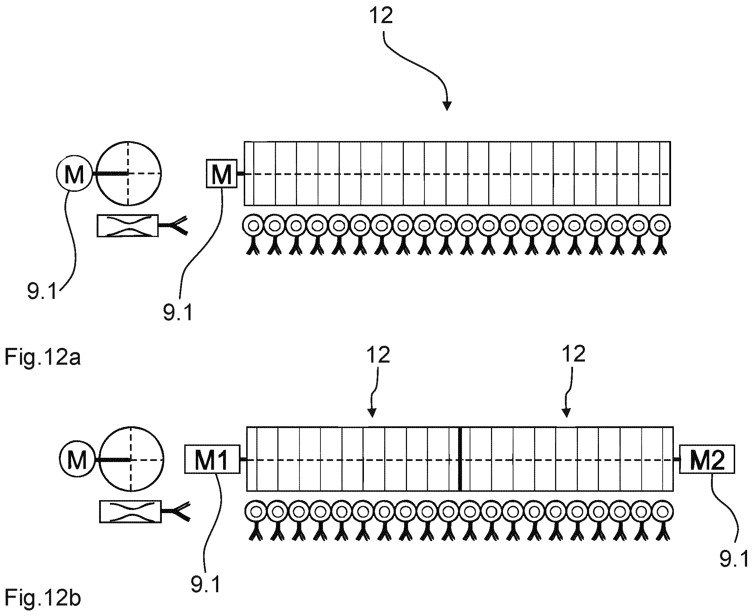

Anhand der Darstellung in den Fig. 12 a und b sollen im Folgenden zwei mögliche Konzepte für den Dosierantrieb 9.1 der Dosierwalzen 12 erläutert werden. Wie dies in Fig. 12 a erkennbar ist, weist eine Dosierwalze 12 einen Dosierantrieb 9.1 auf, über welchen sämtliche auf der Dosierwalze 12 angeordnete Dosierabschnitte 9.2 angetrieben werden können. Über diesen zentralen Dosierantrieb 9.1 ist eine zentrale Drehzahlsteuerung für alle Dosierabschnitte 9.2 möglich. Jedem Dosierabschnitt 9.2 kann ein Injektor zur Verteilung des dosierten Saatguts S an die Säeinheiten 3 zugeordnet sein.

Demgegenüber ist gemäß der Darstellung in Fig. 12b eine Variante gezeigt, bei zwei in Reihe angeordneten Dosierwalzen 12 jeweils ein Dosierantrieb 9.1 zugeordnet ist. Die beiden, eine Drehachse A aufweisenden Dosierwalzen 12 sind über die Dosierantriebe 9.1 separat steuerbar, insbesondere bezüglich deren Drehzahl. Ferner sind die beiden Dosierwalzen 12 getrennt voneinander abschaltbar. Hierüber kann eine bereichsweise Abschaltung der Säeinheiten 3 erreicht werden, da die über die auf der abgeschalteten Dosierwalze 12 angeordneten Dosierabschnitten 9.2 Säeinheiten 3 nicht mehr mit Saatgut S versorgt werden. Über die Abschaltung der Dosierwalzen 12 kann somit eine Art Grobeinstellung in Form einer bereichsweisen Abschaltung oder Steuerung von Säeinheiten 3 erfolgen. In Kombination mit den Saatgutweichen 4, welche manche Dosiereinheiten 11 aufweisen, ist eine Feineinstellung an ausgewählten Säeinheiten 3 möglich, beispielsweise zur gezielten Abschaltung einzelner Säeinheiten 3 zur Fahrgassensteuerung.

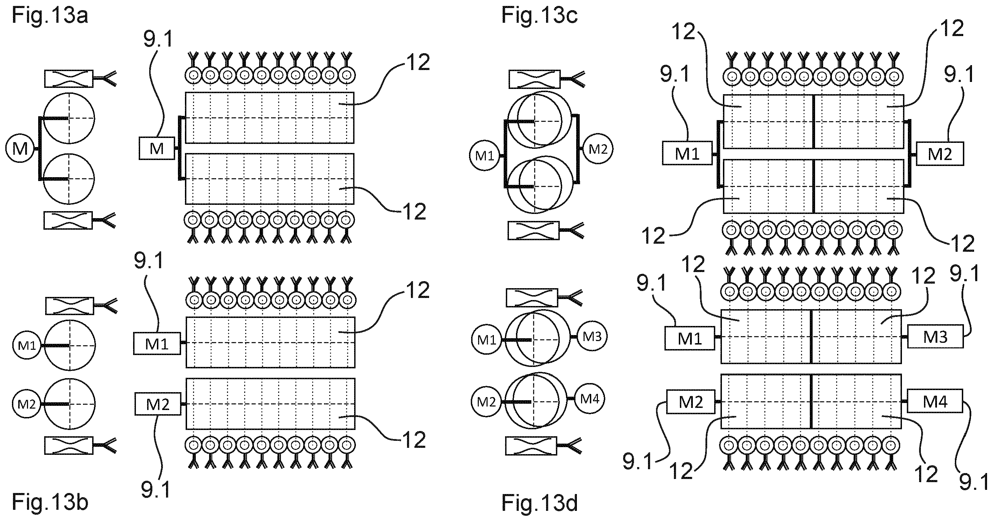

In den Fig. 13 a-d sind vier weitere Dosierkonzepte dargestellt, welche bei einer erfindungsgemäßen Maschine 1 umsetzbar sind und nachfolgend erläutert werden sollen. Die durch unterschiedliche Anordnungen von Dosierwalzen 12 und Dosierantrieben 9.1 gekennzeichneten Dosierkonzepte erlauben eine Anpassung der Maschine 1 an unterschiedliche Anforderungen.

Die Anordnung gemäß Fig. 13 a weist zwei - im Unterschied zur Darstellung gemäß Fig. 12 b - nicht in Reihe, sondern parallel zueinander angeordnete Dosierwalzen 12 auf, welche über einen gemeinsamen Dosierantrieb 9.2 antreibbar sind. Im Unterschied dazu ist in Fig. 13 b eine Anordnung gezeigt, bei der die beiden parallel zueinander angeordneten Dosierwalzen 12 jeweils einen eigenen, separat steuerbaren Dosierantrieb 9.1 aufweisen. In Fig. 13 c ist eine Anordnung mit vier Dosierwalzen 12 gezeigt, von denen je zwei parallel und in Reihe angeordnet sind und welche über zwei Dosierantriebe 9.1 antreibbar sind. Schließlich ist in Fig. 13 d die Anordnung der Dosierwalzen 12 gemäß Fig. 13 c gezeigt, bei der zwei zusätzliche Dosierantriebe 9.1 vorgesehen sind, so dass eine separate Steuerung der vier Dosierwalzen 12 ermöglicht werden kann.

Die vorstehend beschriebene Maschine 1 zeichnet sich dadurch aus, dass die Absperrung der Säeinheiten 3 einzeln oder gruppenweise mit nur geringen Verzögerungen möglich ist und zudem die Beschädigungsgefahr des Saatguts S reduziert ist.

### Bezugszeichen:

- 1: Maschine
- 2: Vorratsbehälter
- 3: Säeinheit
- 3.1: Säschar
- 4: Saatgutweiche
- 4.1: Aktor
- 5: Versorgungsleitung
- 6: Rückführleitung
- 7: Saatgutabscheider
- 8: Bypassleitung
- 9: Saatgutdosierer
- 9.1: Dosierantrieb
- 9.2: Dosierabschnitt
- 9.3: Dosierkammer
- 9.4: Dosierlippe
- 9.5: Rückführlippe
- 10: Luftstromerzeugung
- 11: Dosiereinheit
- 12: Dosierwalze
- 13: Zugmaschine

- A: Drehachse
- D: Dosierbereich
- L: Luftstrom
- Ls: Saatgutluftstrom
- M: Längsmittelachse
- N: Nutzfläche
- R: Rückführbereich
- S: Saatgut
- W₁: Versorgungsstellung
- W₂: Rückführstellung

## Patentansprüche

1. Maschine zum Ausbringen von Saatgut (S) auf einer landwirtschaftlichen Nutzfläche (N), mit einem Vorratsbehälter (2) zur Aufnahme des Saatguts (S), einer Dosiereinheit (11), die einen Saatgutdosierer (9) aufweist, einer von der Dosiereinheit (11) über einen Saatgutluftstrom (Ls) mit Saatgut (S) versorgbaren Säeinheit (3) zur Aussaat des Saatguts (S), und
einer der Dosiereinheit (11) zugeordneten, von dem Saatgutluftstrom (Ls) durchströmbaren Saatgutweiche (4), die derart ausgebildet und angeordnet ist, dass die Säeinheit (3) in einer Versorgungsstellung (W₁) der Saatgutweiche (4) mit Saatgut (S) versorgt wird und die Saatgutversorgung der Säeinheit (3) in einer Rückführstellung (W₂) der Saatgutweiche (4) unterbrochen und das Saatgut (S) in einen von dem Vorratsbehälter (2) getrennten Rückführbereich (R) zurückgeführt wird, wobei der Saatgutdosierer (9) einen über einen Antrieb (9.1) drehbar angetriebenen Dosierabschnitt (9.2) aufweist, **dadurch gekennzeichnet, dass** der Rückführbereich (R) derart oberhalb eines Dosierbereichs (D) angeordnet ist, dass mit ein und demselben Dosierabschnitt (9.2) gleichzeitig Saatgut (S) in dem Dosierbereich (D) aus dem Vorratsbehälter (2) in den Luftstrom (L_{S}) einbringbar und aus dem Rückführbereich (R) Saatgut (S) in den Vorratsbehälter (2) zurückführbar ist.

2. Maschine nach Anspruch 1, **gekennzeichnet durch** eine sich zwischen der Saatgutweiche (4) und der Säeinheit (3) erstreckende, von dem Saatgutluftstrom (Ls) durchströmbare Versorgungsleitung (5) und/oder eine sich zwischen der Saatgutweiche (4) und dem Rückführbereich (R) erstreckende, von dem Saatgutluftstrom (Ls) durchströmbare Rückführleitung (6).

3. Maschine nach Anspruch 2, **dadurch gekennzeichnet, dass** die Rückführleitung (6) in einen Saatgutabscheider (7) zur Abscheidung des Saatguts (S) aus dem Saatgutluftstrom (Ls) mündet.

4. Maschine nach Anspruch 3, **gekennzeichnet durch** eine sich zwischen dem Saatgutabscheider (7) und der Versorgungsleitung (5) erstreckende Bypassleitung (8) zur Ableitung des von dem Saatgut (S) getrennten Luftstroms (L).

5. Maschine nach Anspruch 4, **dadurch gekennzeichnet, dass** die Bypassleitung (8) gemeinsam mit der Saatgutweiche (4) derart umschaltbar ist, dass diese in der Versorgungsstellung (W₁) geschlossen und in der Rückführstellung (W₂) geöffnet ist.

6. Maschine nach einem der vorhergehenden Ansprüche, **dadurch gekennzeichnet, dass** die Saatgutweiche (4) als ein einseitig drehgelagertes Schließmittel ausgebildet ist.

7. Maschine nach einem der vorhergehenden Ansprüche, **dadurch gekennzeichnet, dass** der Saatgutdosierer (9) zur Erzeugung und/oder Einstellung des Saatgutluftstroms (Ls) eingerichtet ist.

8. Maschine nach einem der vorstehenden Ansprüche, **dadurch gekennzeichnet, dass** der Dosierabschnitt (9.2) den mit einer Dosierlippe (9.4) zusammenwirkenden Dosierbereich (D) aufweist, über welchen das Saatgut (S) zur Bildung des Saatgutluftstroms (Ls) aus dem Vorratsbehälter (2) in einen durch den Dosierbereich (D) geführten Luftstrom (L) einbringbar ist.

9. Maschine nach einem der Ansprüche 1 oder 8, **dadurch gekennzeichnet, dass** der Dosierabschnitt (9.2) den mit einer Rückführlippe (9.5) zusammenwirkenden Rückführbereich (R) aufweist, über welchen das Saatgut (S) aus dem Saatgutabscheider (7) in den Vorratsbehälter (2) rückführbar ist.

10. Maschine nach einem der vorstehenden Ansprüche, **dadurch gekennzeichnet, dass** der Rückführbereich (R) oberhalb der Drehachse (A) des Dosierabschnitts (9.2) und der Dosierbereich (D) unterhalb der Drehachse (A) des Dosierabschnitts (9.2) angeordnet ist.

11. Maschine nach den Ansprüchen 8 und 9, **dadurch gekennzeichnet, dass** die Förderwirkung der Rückführlippe (9.5) größer als die Förderwirkung der Dichtlippe (9.4) ist.

12. Maschine nach einem der vorhergehenden Ansprüche, **gekennzeichnet durch** mehrere gleichartig aufgebaute Dosiereinheiten (11), welche zur Dosierung unterschiedlicher Saatgutmengen an einer oder mehreren Säeinheiten (3) und/oder einem oder mehreren Säscharen (3.1) parallel nebeneinander angeordnet sind.

13. Maschine nach Anspruch 12, **gekennzeichnet durch** zumindest eine Dosierwalze (12) mit mehreren auf einer Drehachse (A) axial angeordneten Dosierabschnitten (9.2).

## Claims

1. Machine for spreading seed (S) on an agricultural area (N), comprising a storage container (2) for receiving the seed (S), a metering unit (11) which has a seed metering device (9), a sowing unit (3) for sowing the seed (S) which sowing unit can be supplied with seed (S) by the metering unit (11) by means of a seed airflow (L_{S}), and
a seed diverter (4) which is assigned to the metering unit (11) and through which the seed airflow (L_{S}) can flow, which seed diverter is designed and arranged such that the sowing unit (3) is supplied with seed (S) in a supply position (W₁) of the seed diverter (4) and the seed supply to the sowing unit (3) is interrupted in a return position (W₂) of the seed diverter (4) and the seed (S) is returned back into a return region (R) separate from the storage container (2), the seed metering device (9) having a metering portion (9.2) rotatably driven by a drive (9.1), **characterized in that** the return region (R) is arranged above a metering region (D) such that simultaneously, by means of one and the same metering portion (9.2), seed (S) can be introduced in the metering region (D) from the storage container (2) into the airflow (L_{S}) and seed (S) can be returned from the return region (R) into the storage container (2).

2. Machine according to claim 1, **characterized by** a supply line (5) extending between the seed diverter (4) and the sowing unit (3), through which the seed airflow (L_{S}) can flow, and/or a return line (6) extending between the seed diverter (4) and the return region (R), through which the seed airflow (L_{S}) can flow.

3. Machine according to claim 2, **characterized in that** the return line (6) opens into a seed separator (7) for separation of the seed (S) from the seed airflow (L_{S}).

4. Machine according to claim 3, **characterized by** a bypass line (8) extending between the seed separator (7) and the supply line (5) for diverting the airflow (L) separated from the seed (S).

5. Machine according to claim 4, **characterized in that** the bypass line (8) together with the seed diverter (4) can be switched such that it is closed in the supply position (W₁) and open in the return position (W₂).

6. Machine according to any of the preceding claims, **characterized in that** the seed diverter (4) is a closing means rotatably mounted at one side.

7. Machine according to any of the preceding claims, **characterized in that** the seed metering device (9) is designed for generating and/or adjusting the seed airflow (L_{S}).

8. Machine according to any of the preceding claims, **characterized in that** the metering portion (9.2) has the metering region (D) which interacts with a metering lip (9.4), through which metering region the seed (S) can be introduced from the storage container (2) into an airflow (L) guided through the metering region (D) to form the seed airflow (L_{S}).

9. Machine according to one of claims 1 or 8, **characterized in that** the metering portion (9.2) has the return region (R) which interacts with a return lip (9.5), through which return region the seed (S) can be returned from the seed separator (7) into the storage container (2).

10. Machine according to any of the preceding claims, **characterized in that** the return region (R) is arranged above the axis of rotation (A) of the metering portion (9.2) and the metering region (D) is arranged below the axis of rotation (A) of the metering portion (9.2).

11. Machine according to claims 8 and 9, **characterized in that** the conveying effect of the return lip (9.5) is greater than the conveying effect of the sealing lip (9.4).

12. Machine according to any of the preceding claims, **characterized by** a plurality of similarly constructed metering units (11) which are arranged in parallel next to one another for metering different seed quantities at one or more sowing units (3) and/or one or more seed coulters (3.1).

13. Machine according to claim 12, **characterized by** at least one metering roller (12) comprising a plurality of metering portions (9.2) arranged axially on an axis of rotation (A).

## Revendications

1. Machine permettant l'épandage de semences (S) sur une surface agricole utile (N), comportant un réservoir de stockage (2) pour la réception des semences (S), une unité de dosage (11) présentant un doseur de semences (9), une unité de semis (3) pouvant être alimentée en semences (S) par l'unité de dosage (11) par l'intermédiaire d'un flux d'air de semences (L_{S}) pour le semis des semences (S), et
un aiguillage de semences (4) associé à l'unité de dosage (11) et traversé en écoulement par le flux d'air de semences (L_{S}), lequel aiguillage de semences est conçu et disposé de telle sorte que l'unité de semis (3) est alimentée en semences (S) lorsque l'aiguillage de semences (4) est dans une position d'alimentation (W₁), et que l'alimentation en semences de l'unité de semis (3) est interrompue lorsque l'aiguillage de semences (4) est dans une position de renvoi (W₂) et les semences (S) sont renvoyées dans une zone de renvoi (R) séparée du réservoir de stockage (2), dans laquelle le doseur de semences (9) présente une section de dosage (9.2) entraînée en rotation par l'intermédiaire d'un entraînement (9.1), **caractérisée en ce que** la zone de renvoi (R) est disposée au-dessus d'une zone de dosage (D) de telle sorte qu'avec une seule et même section de dosage (9.2), simultanément, des semences (S) peuvent être introduites dans le flux d'air (L_{S}) dans la zone de dosage (D) à partir du réservoir de stockage (2) et des semences (S) peuvent être renvoyées dans le réservoir de stockage (2) à partir de la zone de renvoi (R).

2. Machine selon la revendication 1, **caractérisée par** une conduite d'alimentation (5) s'étendant entre l'aiguillage de semences (4) et l'unité de semis (3) et pouvant être traversée en écoulement par le flux d'air de semences (L_{S}), et/ou une conduite de renvoi (6) s'étendant entre l'aiguillage de semences (4) et la zone de renvoi (R) et pouvant être traversée en écoulement par le flux d'air de semences (L_{S}).

3. Machine selon la revendication 2, **caractérisée en ce que** la conduite de renvoi (6) débouche dans un séparateur de semences (7) permettant de séparer les semences (S) du flux d'air de semences (L_{S}).

4. Machine selon la revendication 3, **caractérisée par** une conduite de dérivation (8) s'étendant entre le séparateur de semences (7) et la conduite d'alimentation (5) et permettant de dériver le flux d'air (L) séparé des semences (S).

5. Machine selon la revendication 4, **caractérisée en ce que** la conduite de dérivation (8) peut être commutée conjointement avec l'aiguillage de semences (4) de telle sorte que celle-ci est fermée dans la position d'alimentation (W₁) et ouverte dans la position de renvoi (W₂).

6. Machine selon l'une des revendications précédentes,
**caractérisée en ce que** l'aiguillage de semences (4) est conçu comme un moyen de fermeture monté rotatif d'un seul côté.

7. Machine selon l'une des revendications précédentes,
**caractérisée en ce que** le doseur de semences (9) est configuré pour générer et/ou régler le flux d'air de semences (L_{S}).

8. Machine selon l'une des revendications précédentes,
**caractérisée en ce que** la section de dosage (9.2) présente la zone de dosage (D) coopérant avec une lèvre de dosage (9.4), zone de dosage par l'intermédiaire de laquelle les semences (S) peuvent être introduites dans un flux d'air (L) guidé à travers la zone de dosage (D) à partir du réservoir de stockage (2) pour former le flux d'air de semences (L_{S}).

9. Machine selon l'une des revendications 1 ou 8, **caractérisée en ce que** la section de dosage (9.2) présente une zone de renvoi (R) coopérant avec une lèvre de renvoi (9.5), zone de renvoi par l'intermédiaire de laquelle les semences (S) peuvent être renvoyées dans le réservoir de stockage (2) à partir du séparateur de semences (7).

10. Machine selon l'une des revendications précédentes,
**caractérisée en ce que** la zone de renvoi (R) est disposée au-dessus de l'axe de rotation (A) de la section de dosage (9.2) et la zone de dosage (D) est disposée en dessous de l'axe de rotation (A) de la section de dosage (9.2).

11. Machine selon les revendications 8 et 9, **caractérisée en ce que** l'effet de transport de la lèvre de renvoi (9.5) est supérieur à l'effet de transport de la lèvre d'étanchéité (9.4).

12. Machine selon l'une des revendications précédentes, **caractérisée par** plusieurs unités de dosage (11) de conception identique, lesquelles sont disposées parallèlement les unes à côté des autres sur une ou plusieurs unités de semis (3) et/ou sur un ou plusieurs socs de semoir (3.1) pour le dosage de différentes quantités de semences.

13. Machine selon la revendication 12, **caractérisée par** au moins un rouleau de dosage (12) comportant plusieurs sections de dosage (9.2) disposées axialement sur un axe de rotation (A).
